(19) **Europäisches Patentamt European Patent Office Office européen des brevets**

(11) **EP 1 122 909 B1**

(12) **FASCICULE DE BREVET EUROPEEN**

(45) Date de publication et mention
de la délivrance du brevet:
**17.04.2013 Bulletin 2013/16**

(51) Int Cl.:
*H04L 9/06* (2006.01)  *G06F 7/00* (2006.01)
*G06K 19/073* (2006.01)

(21) Numéro de dépôt: **01400228.1**

(22) Date de dépôt: **30.01.2001**

(54) **Procédé d'exécution d'un protocole cryptographique entre deux entités électroniques.**

Verfahren zur Ausführung eines kryptographischen Protokolls zwischen zwei elektronischen Einheiten

Method for performing a cryptographic protocol between two electronic units

(84) Etats contractants désignés:
**AT BE CH CY DE DK ES FI FR GB GR IE IT LI LU MC NL PT SE TR**

(30) Priorité: **31.01.2000 FR 0001199**

(43) Date de publication de la demande:
**08.08.2001 Bulletin 2001/32**

(73) Titulaire: **Oberthur Technologies
92300 Levallois-Perret (FR)**

(72) Inventeurs:
• **Akkar, Mehdi-Laurent
94250 Gentilly (FR)**
• **Dischamp, Paul
75015 Paris (FR)**

(74) Mandataire: **Santarelli
14 Avenue de la Grande Armée
B.P. 237
75822 Paris Cedex 17 (FR)**

(56) Documents cités:
**EP-A- 0 566 811     NL-C- 1 011 800**

**Description**

L'invention se rapporte à un procédé d'exécution d'un protocole cryptographique entre deux entités électroniques, l'une d'elles étant par exemple, mais non exclusivement une carte à microprocesseur. L'invention concerne plus particulièrement un perfectionnement dudit protocole pour prévenir les "attaques", c'est-à-dire les tentatives de fraude fondées sur l'analyse du matériel en fonctionnement, notamment par le biais de mesures de la consommation de courant pendant l'exécution d'un tel protocole cryptographique provoqué par un fraudeur.

On sait que certaines entités électroniques cryptées, notamment les cartes à microcircuits sont vulnérables à certaines attaques fondées sur l'analyse de certains paramètres pendant une phase de fonctionnement. On dit que les informations peuvent "fuir" à partir d'un calcul fait dans la carte, typiquement l'exécution d'un protocole cryptographique provoqué par le fraudeur en possession de la carte. Les paramètres analysés pendant l'exécution d'un tel protocole peuvent être, typiquement, des différences de temps de calcul ou des radiations électromagnétiques pendant l'exécution du calcul mais surtout la consommation de courant de l'entité électronique dont on cherche à forcer le code.

Ainsi, l'attaque classique consiste à faire exécuter par l'entité électronique tombée en la possession du fraudeur, un certain nombre de protocoles cryptographiques fondés sur des messages quelconques, donc voués à l'échec, mais ayant pour conséquence de faire exécuter chaque fois, par l'entité (la carte à microcircuit) une chaîne d'opérations connue sous l'abréviation DES (Data Encryption Standard) tout en analysant la consommation de courant à chaque exécution dudit DES. Le but de cette attaque est de retrouver la clé secrète de ladite entité. Le DES est, quant à lui, un algorithme bien connu, très largement utilisé actuellement dans le domaine des cartes bancaires ou celui des cartes de contrôle d'accès.

A titre d'exemple, dans le cadre d'une authentification normale entre une entité A, par exemple un serveur et une entité B, par exemple une carte à microcircuit dans laquelle le DES se trouve programmé, les échanges d'informations entre les deux entités sont les suivants :

- le serveur A demande à la carte B d'envoyer un message, A et B étant supposés être en possession de la même clé.
- B envoie un message quelconque et le garde en mémoire.
- A applique le DES au message en utilisant sa clé et renvoie le résultat à la carte B.
- Parallèlement, la carte B applique le DES au message qu'elle a envoyé au serveur A en faisant usage de sa propre clé. Elle obtient un résultat qui est comparé à celui qui a été élaboré par le serveur A. Si les deux résultats sont identiques, l'authentification est validée.

Par ailleurs, dans le cas d'une fraude, c'est-à-dire dans le cas où le fraudeur dispose de la carte et cherche à déterminer la clé, celui-ci peut connecter la carte à un lecteur par lequel il pourra lui transmettre des messages et la relier à des moyens d'enregistrement de la consommation de courant pendant l'exécution des opérations qu'elle effectue.

A partir de ces moyens simples, le fraudeur constitue un système F qu'il connecte la carte à la place du serveur A.

Le processus est alors le suivant. F demande un message à la carte exactement comme dans le cas de l'initialisation d'une authentification. B envoie ce message. F envoie à B un autre message censé représenter le résultat du traitement par le DES du message envoyé par B. Bien entendu, ce message est erroné. Cependant, B fait intervenir sa propre clé pour exécuter un DES afin d'obtenir un résultat, dans le but de le comparer avec le message (erroné) envoyé par F. Le résultat de cette comparaison est forcément négatif mais le fraudeur a réussi à provoquer l'exécution d'un DES par B. Pendant l'exécution dudit DES, la consommation de courant est détectée et mémorisée.

Si F est en mesure de faire effectuer un certain nombre de DES, dans les mêmes conditions, par la carte B, et de mémoriser à chaque fois les consommations de courant, il est possible de mettre en oeuvre une attaque dont le principe est connu. Cette attaque dite "DPA" (Différentiel Power Analysis) permet de reconstituer la clé secrète de l'entité B.

Le document WO 99/63696 vise à contrer des attaques de ce type en réduisant les informations exploitables susceptibles de "fuir" pendant l'exécution des algorithmes. Pour ce faire, il suggère notamment d'introduire des aléas dans les protocoles cryptographiques afin d'augmenter le nombre de cycles nécessaires pour retrouver la clé secrète.

Le brevet néerlandais NL 1011800 C décrit la protection d'une clé secrète pendant l'exécution d'un procédé cryptographique dans un circuit intégré. L'exécution du procédé cryptographique est une chaîne d'opérations. La protection est réalisée en ce que la clé, les données d'entrée, et/ou les données intermédiaires sont masquées par des données aléatoires.

L'invention propose une parade précise à une attaque du genre "DPA" par complémentation aléatoire de certaines opérations du DES.

L'invention s'applique tout particulièrement aux entités utilisant le DES mais elle est applicable aussi, comme on le verra plus loin, à d'autres entités (cartes à microcircuits) utilisant d'autres algorithmes que le DES pourvu que celui-ci soit constitué d'une succession d'opérations possédant certaines propriétés qui seront explicitées plus loin.

Plus précisément, l'invention concerne un procédé d'élaboration d'un protocole cryptographique entre une première entité électronique et une seconde entité électronique susceptible d'attaque, selon lequel un message quelconque est élaboré, à partir duquel une chaîne d'opérations est effectuée par ladite seconde entité, aboutissant à l'élaboration d'un message résultant ou réponse, ladite réponse étant comparée au résultat d'un autre traitement semblable appliqué audit message et effectué par ladite première entité, caractérisé en ce que, au moins à certaines étapes de ladite chaîne d'opérations, ladite seconde entité effectue, soit une opération d'un type choisi, soit la même opération complémentée, le choix dépendant d'une décision aléatoire et en ce que ladite réponse est constituée par le résultat de la dernière opération de ladite chaîne, éventuellement complémenté.

La complémentation peut être réalisée soit octet par octet, en faisant le OU exclusif de l'octet courant aléatoirement avec l'une des deux valeurs hexadécimales 00 et FF, soit bit à bit, en traitant ensemble les huit bits consécutifs de l'octet courant et en faisant le OU exclusif avec un nombre choisi aléatoirement, à chaque octet traité, parmi les 256 valeurs hexadécimales comprises entre 00 et FF.

Parmi les opérations susceptibles d'être complémentées, on peut citer l'opération dite de OU exclusif ou encore une opération de permutation des bits du message ou d'un résultat intermédiaire obtenu en effectuant ladite chaîne d'opérations, c'est-à-dire, selon l'exemple décrit, après l'exécution d'une opération donnée du DES. On peut encore citer l'opération d'accès indexé à un tableau ou toute opération stable par rapport à l'application de la fonction OU exclusif, notamment l'opération consistant à transférer le message ou un résultat intermédiaire précité, d'un emplacement à un autre, d'un espace de mémorisation.

Selon un mode de réalisation possible, on définit dans ladite seconde entité deux chaînes d'opérations pour le traitement dudit message, l'une des chaînes étant constituée d'une suite d'opérations données et l'autre chaîne étant constituée d'une suite des mêmes opérations complémentées et d'une complémentation finale et on décide de façon aléatoire d'exécuter l'une des deux chaînes d'opérations à chaque réception d'un message provenant de ladite première entité.

Selon un autre mode de réalisation, actuellement jugé préférable, le procédé consiste à utiliser ledit message ou un résultat intermédiaire résultant de l'exécution d'une opération précédente de ladite chaîne, à lui appliquer une nouvelle opération de ladite chaîne, ou cette même opération complémentée, en fonction de l'état d'un paramètre aléatoire associé à cette nouvelle opération, à mettre à jour un compteur de complémentations et à prendre en compte l'état de ce compteur à la fin de l'exécution de ladite chaîne d'opérations pour décider de la configuration finale de ladite réponse.

Selon encore une autre variante avantageuse, le procédé consiste à utiliser ledit message ou un résultat intermédiaire résultant de l'exécution d'une opération précédente de ladite chaîne, à lui appliquer une nouvelle opération de ladite chaîne ou cette même opération complémentée, en fonction de l'état d'un paramètre aléatoire associé à cette nouvelle opération et à transmettre, d'opération en opération, des informations faisant partie desdits résultats intermédiaires, nécessaires à la configuration finale de ladite réponse.

Par ailleurs, on a trouvé que la différence entre le nombre de fois où les opérations sont effectuées de façon normale et le nombre de fois où elles sont effectuées avec complémentation, pendant l'exécution du DES ou analogue, ne doit pas être trop importante pour que le procédé conserve toute son efficacité vis-à-vis de l'attaque décrite ci-dessus. Par conséquent, le procédé est aussi remarquable par le fait que, pendant qu'on effectue ladite série d'opérations, on calcule la différence entre le nombre de fois où les opérations ont été effectuées de façon normale et le nombre de fois où elles ont été effectuées avec complémentation et en ce qu'on supprime l'aléa sur la décision d'effectuer des opérations de façon normale ou complémentée, pour un certain nombre d'opérations subséquentes, lorsque ladite différence dépasse une valeur prédéterminée, en vue de réduire ladite différence.

L'invention sera mieux comprise et d'autres avantages de celle-ci apparaîtront plus clairement à la lumière de la description qui va suivre, d'un procédé d'exécution d'un protocole cryptographique conforme à son principe, donnée uniquement à titre d'exemple et faite en référence aux dessins annexés dans lesquels :

- la figure 1 est un schéma illustrant une partie de l'exécution d'un protocole cryptographique, plus précisément l'exécution d'un DES programmé selon l'invention ; et
- la figure 2 est un schéma illustrant une autre façon d'exécuter le DES conformément à l'invention.

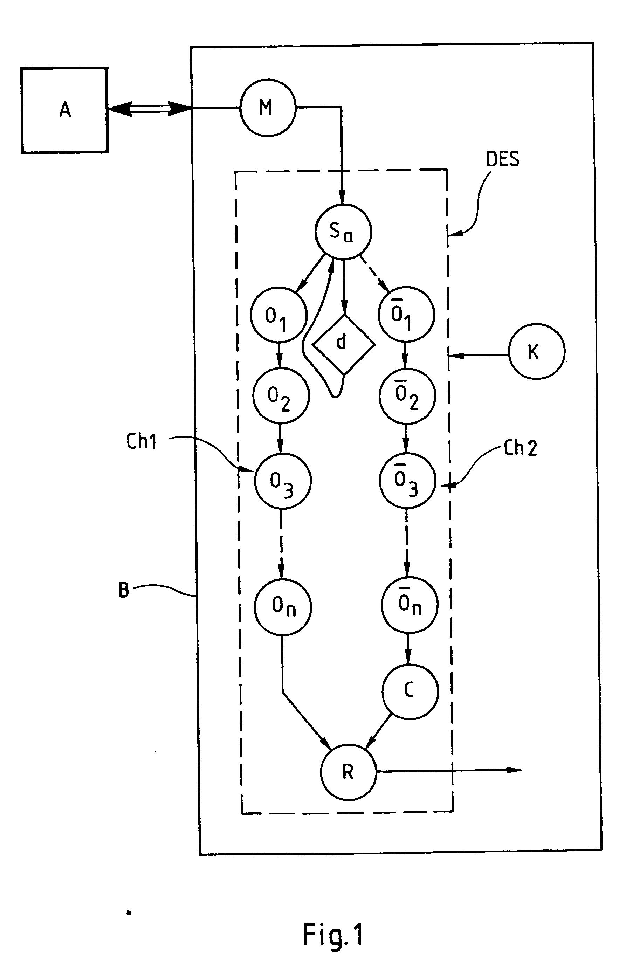

En considérant plus particulièrement la figure 1, on note que le procédé d'élaboration d'un protocole cryptographique entre deux entités électroniques A et B, qui est partiellement illustré sur le schéma, peut être exécuté dans l'une de ces entités, typiquement dans une carte à microprocesseur B lorsque celle-ci est connectée, par exemple, à un serveur A. Le DES conforme à l'invention est programmé dans la carte à microprocesseur B. Celle-ci renferme également en mémoire une clé secrète K qui est susceptible d'intervenir dans certaines des opérations $O_1$, $O_2$, $O_3$ ...$O_n$ qui s'enchaînent lors de l'exécution du DES. Pendant l'élaboration du protocole cryptographique, la première entité (typiquement le serveur A précité) demande à la seconde entité (la carte B) d'envoyer un message M. Le message généré par B est quelconque ; il est gardé en mémoire dans la carte B. Pendant que A traite ce message avec son propre DES, la carte B applique le DES conforme à l'invention au message M qu'elle a envoyé au serveur A, en faisant usage de sa propre clé K. Dans l'exemple, le DES appliqué dans la carte B comporte deux chaînes d'opérations. Une première chaîne $Ch_1$ d'opérations $O_1$, $O_2$, $O_3$ ... $O_n$ cor-

respond à un DES classique. La seconde chaîne $Ch_2$ d'opérations $\overline{O}_1, \overline{O}_2, \overline{O}_3, ...\overline{O}_n$ est constituée de la même succession des mêmes opérations, mais complémentées. Elle s'achève par une complémentation globale C du résultat élaboré à la fin de la dernière opération complémentée $\overline{O}_n$.

En outre, on décide de façon aléatoire d'exécuter l'une ou l'autre des deux chaînes d'opérations à chaque élaboration d'un message quelconque précité. Ce choix aléatoire est symbolisé par un sélecteur Sa interposé entre le message M et chacune des deux chaînes d'opérations. Le positionnement du sélecteur est aléatoire, ce qui signifie que chaque fois qu'un message M doit être traité, l'une ou l'autre des deux chaînes d'opérations $Ch_1$, $Ch_2$ est choisie de façon aléatoire.

Si la chaîne non complémentée a été choisie, le résultat donné par la dernière opération On constitue la réponse R qui sera comparée à celle qu'aura élaboré le serveur A. Dans le cas où la chaîne des opérations complémentées a été sélectionnée, le résultat de la dernière opération $\overline{O}_n$ est complémenté et constitue la réponse R.

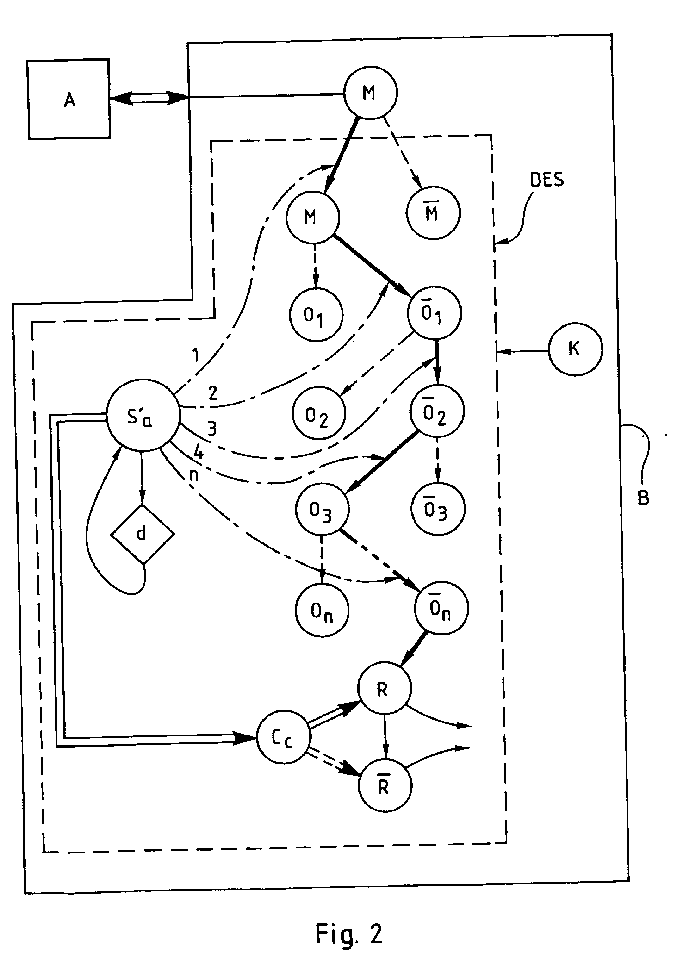

Dans le mode de réalisation de la figure 2, on retrouve un DES programmé conformément au principe de l'invention, c'est-à-dire comportant les opérations habituelles d'un DES : $O_1$, $O_2$, $O_3$... $O_n$ ou les opérations semblables complémentées $\overline{O}_1, \overline{O}_2, \overline{O}_3, ...\overline{O}_n$. Le message lui-même peut être complémenté, c'est-à-dire utilisé tel quel au début de l'exécution du DES ou sous forme complémentée $\overline{M}$. La clé K intervient pour l'exécution de certaines opérations au moins. Cependant, la sélection des opérations, (c'est-à-dire le choix entre l'opération normale ou sa version complémentée) est décidée de façon aléatoire d'une opération à l'autre. Autrement dit, on utilise le message M ou un résultat intermédiaire résultant de l'exécution d'une opération précédente $O_i$ (ou $\overline{O}$, ), on lui applique une nouvelle opération de la chaîne ou sa version complémentée (c'est-à-dire $O_{i+1}$ ou $\overline{O_{i+1}}$) en fonction de l'état d'un paramètre aléatoire associé à la nouvelle opération. Ce paramètre aléatoire est élaboré par le sélecteur $S'_a$. Ainsi, en suivant le cheminement de la figure 2, on voit que c'est le message M, tel quel, qui est utilisé et non son complément $\overline{M}$ (commande 1 générée par $S'_a$) que c'est l'opération $\overline{O}_1$ qui est sélectionnée (commande 2) puis l'opération $\overline{O}_2$ (commande 3), puis l'opération $O_3$ (commande 4) et qu'enfin on aboutit à la sélection de l'opération $\overline{O}_n$ (commande n). Le résultat de la dernière opération, en l'occurrence ici $\overline{O}_n$ peut constituer le résultat R ou le résultat $\underline{R}$ complémenté qui sera comparé à un autre résultat élaboré par l'entité A par mise en oeuvre de son propre DES. Le choix entre R et $\overline{R}$ est donné par l'état d'un compteur de complémentation $C_c$ alimenté tout au long de l'élaboration du processus par le sélecteur $S'_a$. Autrement dit, l'état du compteur de complémentation $C_c$ permet de savoir si on doit valider le résultat R ou son complément $\overline{R}$ pour la configuration finale de la réponse à comparer aux calculs de l'entité A.

Il est à noter qu'une variante permet de supprimer le compteur $C_c$. Il suffit de transmettre, d'opération en opération, des informations faisant partie des résultats intermédiaires et représentant le nombre de fois où une opération du DES a été exécutée sous forme complémentée. Dans ce cas, les résultats intermédiaires transmis d'une opération à l'autre comportent eux-mêmes l'information équivalente à celle que donne in fine le compteur $C_c$ dans le mode de réalisation de la figure 2. Dans ce cas, le dernier résultat intermédiaire donné par l'exécution de l'opération On ou $\overline{O}_n$ est ou non complémenté en fonction d'une partie des informations propres qu'il contient. On en déduit la configuration finale de la réponse R.

Revenant à la figure 1 ou 2, on note que le sélecteur Sa ou $S'_a$ est exploité pour calculer la différence entre le nombre de fois où les opérations ont été effectuées de façon normale et le nombre de fois où elles ont été effectuées avec complémentation. Cette différence $\underline{d}$ est mémorisée et actualisée d'opération en opération.

Lorsque la différence dépasse une valeur prédéterminée, ce qui peut réduire l'efficacité du procédé vis-à-vis de l'attaque DPA, on génère un ordre qui inhibe momentanément le sélecteur $S'_a$. Autrement dit, on supprime l'aléa sur la décision d'effectuer des opérations de façon normale ou complémentée, pour exécuter un certain nombre d'opérations subséquentes dans le mode (normal ou complémenté) le moins utilisé jusque là. L'aléa est remis en oeuvre lorsque la valeur de la différence $\underline{d}$ a été suffisamment réduite.

Il se trouve que toutes les opérations d'un DES classique permettent la mise en oeuvre du procédé selon l'une ou l'autre des variantes qui viennent d'être décrites.

A titre d'exemple, on va mentionner ci-dessous certaines opérations susceptibles d'être complémentées et par conséquent compatibles avec la mise en oeuvre du procédé qui vient d'être décrit.

Une opération susceptible d'être complémentée est l'opération dite de OU exclusif.

Une autre opération susceptible d'être complémentée, est une opération connue de permutation des bits du message M ou d'un résultat intermédiaire obtenu en effectuant la chaîne d'opérations. Pour les permutations (simples, compressives ou expansives), on stockera avantageusement le masque permuté en mémoire.

Une autre opération susceptible d'être complémentée est l'opération dite" d'accès indexé à un tableau.

Une autre opération susceptible d'être complémentée est le transfert du message ou d'un résultat intermédiaire obtenu en effectuant une opération de la chaîne, d'un emplacement à un autre d'un espace de mémorisation défini dans l'entité B. Pratiquement, on applique de manière aléatoire un masque par OU exclusif à la donnée transférée.

Plus généralement, une opération susceptible d'être complémentée est une opération stable par rapport à l'application de la fonction ou exclusif, c'est-à-dire telle que :

$$\forall (x, y) : f(x \oplus y) = f(x) \oplus f(y)$$

C'est le cas, entre autres, des permutations et du transfert de données.

Comme mentionné précédemment, un DES classique se compose d'opérations répondant aux critères définis ci-dessus mais l'invention s'applique aussi à tout algorithme remplissant une fonction analogue à celle d'un DES, pourvu qu'il soit constitué d'opérations remplissant les conditions énoncées ci-dessus.

D'autres opérations à caractère aléatoire peuvent être combinées à celles qui définissent le procédé décrit ci-dessus. Notamment, lorsque plusieurs opérations consécutives de la chaîne sont commutatives, on peut permuter l'ordre de leur exécution, de façon aléatoire.

## Revendications

1. Procédé d'élaboration d'un protocole cryptographique entre une première entité électronique (A) et une seconde entité électronique (B) susceptible d'attaque, selon lequel un message quelconque (M) est élaboré, à partir duquel une chaîne d'opérations est effectuée par ladite seconde entité, aboutissant à l'élaboration d'un message résultant ou réponse (R), ladite réponse étant comparée au résultat d'un autre traitement semblable appliqué audit message et effectué par ladite première entité, **caractérisé en ce que**, au moins à certaines étapes de ladite chaîne d'opérations, ladite seconde entité effectue, soit une opération d'un type choisi ($O_1$, $O_2$, $O_3$ ... $O_n$), soit la même opération complémentée ($\overline{O_1}$, $\overline{O_2}$, $\overline{O_3}$,...$\overline{O_n}$), le choix dépendant d'une décision aléatoire et **en ce que** ladite réponse est constituée par le résultat de la dernière opération ($\overline{O_n}$) de ladite chaîne, éventuellement complémenté.

2. Procédé selon la revendication 1, **caractérisé en ce qu'**une opération susceptible d'être complémentée est l'opération dite de OU exclusif.

3. Procédé selon la revendication 1 ou 2, **caractérisé en ce qu'**une opération susceptible d'être complémentée est une opération de permutation des bits dudit message ou d'un résultat intermédiaire obtenu en effectuant ladite chaîne d'opérations.

4. Procédé selon l'une des revendications 1 à 3, **caractérisé en ce qu'**une opération susceptible d'être complémentée est l'opération d'accès indexé à un tableau.

5. Procédé selon l'une des revendications 1 à 4, **caractérisé en ce qu'**une opération susceptible d'être complémentée est une opération stable par rapport à l'application de la fonction OU exclusif.

6. Procédé selon la revendication 5, **caractérisé en ce qu'**une opération susceptible d'être complémentée est le transfert dudit message ou d'un résultat intermédiaire obtenu en effectuant une opération de ladite chaîne, d'un emplacement à un autre d'un espace de mémorisation.

7. Procédé selon l'une des revendications précédentes, **caractérisé en ce qu'**il consiste à utiliser ledit message ou un résultat intermédiaire résultant de l'exécution d'une opération précédente de ladite chaîne, à lui appliquer une nouvelle opération de ladite chaîne, ou cette même opération complémentée, en fonction de l'état d'un paramètre aléatoire ($S'_a$) associé à cette nouvelle opération, à mettre à jour un compteur de complémentations ($C_c$) et à prendre en compte l'état de ce compteur à la fin de l'exécution de ladite chaîne d'opérations pour décider de la configuration finale de ladite réponse.

8. Procédé selon l'une des revendications 1 à 6, **caractérisé en ce qu'**il consiste à utiliser ledit message ou un résultat intermédiaire résultant de l'exécution d'une opération précédente de ladite chaîne, à lui appliquer une nouvelle opération de ladite chaîne, ou cette même opération complémentée, en fonction de l'état d'un paramètre aléatoire ($S'_a$) associé à cette nouvelle opération et à transmettre, d'opération en opération, des informations faisant partie desdits résultats intermédiaires, nécessaires à la configuration finale de ladite réponse.

9. Procédé selon l'une des revendications 1 à 6, **caractérisé en ce qu'**on définit dans ladite seconde entité deux chaînes d'opérations ($Ch_1$, $Ch_2$) pour le traitement dudit message, l'une des chaînes étant constituée d'une suite d'opérations données et l'autre chaîne étant constituée d'une suite des mêmes opérations complémentées et d'une complémentation finale (C) et **en ce qu'**on décide de façon aléatoire d'exécuter l'une des deux chaînes d'opérations à chaque élaboration d'un message précité.

10. Procédé selon l'une des revendications précédentes, **caractérisé en ce que**, pendant qu'on effectue ladite série d'opérations, on calcule la différence (d) entre le nombre de fois où les opérations ont été effectuées de façon normale et le nombre de fois où elles ont été effectuées avec complémentation et **en ce qu'**on supprime l'aléa ($S'_a$) sur la décision d'effectuer des opérations de façon normale ou complémentée, pour exécuter un certain nombre d'opérations subséquentes, lorsque ladite différence dépasse une valeur prédéterminée dans le mode (normal ou complémenté) le moins utilisé jusque là, en vue de réduire suffisamment ladite différence.

11. Procédé selon l'une des revendications précédentes, **caractérisé en ce que** la complémentation est effectuée octet par octet.

12. Procédé selon l'une des revendications 1 à 10, **caractérisé en ce que** la complémentation est effectuée bit à bit.

13. Procédé selon l'une des revendications précédentes, **caractérisé en ce que**, lorsque plusieurs opérations consécutives de ladite chaîne sont commutatives, on permute l'ordre de leur exécution, de façon aléatoire.

**Claims**

1. Method of generating a cryptographic protocol between a first electronic entity (A) and a second electronic entity (B) subject to attack, according to which any message (M) is generated, on the basis of which a chain of operations is carried by the said second entity resulting in the generation of a resultant or response message (R), the said response being compared with the result of another similar processing applied to the said message and carried out by the said first entity, **characterised in that**, at least in certain stages of the said chain of operations, the said second entity carries out either an operation of a chosen type $(O_1, O_2, O_3 \ldots On)$ or the same operation complemented $(\overline{O}_1, \overline{O}_1, \overline{O}_3 \ldots \overline{O}_n)$, the choice depending on a random decision and **in that** the said response is constituted by the result of the last operation of the said chain, possibly complemented.

2. Method according to claim 1, **characterised in that** an operation capable of being complemented is the operation known as the exclusive OR.

3. Method according to claim 1 or 2, **characterised in that** an operation capable of being complemented is a known operation of permutation of the bits of the said message or of an intermediate result obtained on carrying out the said chain of operations.

4. Method according to one of claims 1 to 3, **characterised in that** an operation capable of being complemented is the operation known as indexed access to a table.

5. Method according to one of claims 1 to 4, **characterised in that** an operation capable of being complemented is a stable operation with respect to the application of the exclusive OR function.

6. Method according to claim 5, **characterised in that** an operation capable of being complemented is the transfer of the said message or of an intermediate result obtained whilst carrying out an operation of the said chain, from one location to another of a storage space.

7. Method according to one of the preceding claims, **characterised in that** consists in using the said message or an intermediate result resulting from the execution of a preceding operation of the said chain, in applying a new operation of the said chain to it, or this same operation complemented, depending on the state of a random parameter $(S'_a)$ associated with this new operation, in updating a complementing counter $(C_c)$ and in taking into account the state of this counter at the end of the execution of the said chain of operations in order to decide on the final configuration of the said response.

8. Method according to one of claims 1 to 6, **characterised in that** consists in using the said message, or an intermediate result of the execution of a preceding operation of the said chain, in applying to it a new operation of the said chain or this same operation complemented, depending on the state of a random parameter $(S'_a)$ associated with this new operation and in transmitting, from operation to operation, information forming part of the said intermediate results, necessary for the final configuration of the said response.

9. Method according to one of claims 1 to 6, **characterised in that** there is defined in the said second entity two chains of operations $(Ch_1, Ch_2)$ for the processing of the said message, one of the chains consisting of a series of data operations and the other chain consisting of a series of the same operations complemented and a final complementing (C) and **in that** it is decided randomly to execute one of the two chains of operations on each reception of a said message

10. Method according to one of the preceding claims, **characterised in that**, whilst the said series of operations is being carried out, there is computed the difference ($\underline{d}$) between the number of times when the operations have been carried out in a normal fashion and the number of times when they have been carried out with complementing and **in that** the hazard $(S'_a)$ is eliminated on the decision to carry out operations in a normal or complemented manner, in order to execute a certain number of subsequent operations, when the said difference exceeds a predetermined value, in the mode (normal or complemented) least used up to that point in view of reducing the said difference sufficiently.

11. Method according to one of the preceding claims, **characterised in that** the complementing is carried out byte by byte.

12. Method according to one of claims 1 to 10, **characterised in that** the complementing is carried out bit by bit.

13. Method according to one of the preceding claims, **characterised in that**, when several consecutive operations of the said chain are commutative, the order of their execution is permuted in a random manner.

**Patentansprüche**

1. Verfahren zur Ausführung eines kryptographischen Protokolls zwischen einer ersten elektronischen Einheit (A) und einer zweiten elektronischen Einheit (B), die möglicherweise angegriffen werden könnte, gemäß dem eine Nachricht (M) erzeugt wird, in Reaktion auf die von der zweiten Einheit eine Kette von Operationen ausgeführt wird, die mit der Erzeugung einer resultierenden Nachricht oder Antwort (R) endet, wobei die Antwort mit dem Ergebnis einer anderen Verarbeitung verglichen wird, die ähnlich ist und von der ersten Einheit an der Nachricht ausgeführt wird, **dadurch gekennzeichnet, dass**, zumindest bei einigen Schritten der Kette von Operationen, die zweite Einheit entweder eine Operation eines gewählten Typs $(O_1, O_2, O_3 ... O_n)$ oder die dazu komplementäre Operation $(\overline{O}_1, \overline{O}_2, \overline{O}_3,... \overline{O}_n)$ ausführt, wobei die Wahl von einer Zufallsentscheidung abhängt, und dadurch, dass das Ergebnis der letzten Operation $(\overline{O}_n)$ der Kette, gegebenenfalls sein Komplement, die Antwort darstellt.

2. Verfahren nach Anspruch 1, **dadurch gekennzeichnet, dass** es sich bei einer Operation, zu der es eine komplementäre Operation gibt, um das sogenannte EXKLUSIV-ODER handelt.

3. Verfahren nach Anspruch 1 oder 2, **dadurch gekennzeichnet, dass** es sich bei einer Operation, zu der es eine komplementäre Operation gibt, um ein Vertauschen von Bits der Nachricht oder eines Zwischenergebnisses, das beim Ausführen der Kette von Operationen erhalten wird, handelt.

4. Verfahren nach einem der Ansprüche 1 bis 3, **dadurch gekennzeichnet, dass** es sich bei einer Operation, zu der es eine komplementäre Operation gibt, um ein indiziertes Zugreifen auf eine Tabelle handelt.

5. Verfahren nach einem der Ansprüche 1 bis 4, **dadurch gekennzeichnet, dass** es sich bei einer Operation, zu der es eine komplementäre Operation gibt, um eine Operation handelt, die bei bzw. bzgl. Anwendung der "Exklusiv-ODER"-Funktion stabil ist.

6. Verfahren nach Anspruch 5, **dadurch gekennzeichnet, dass** es sich bei einer Operation, zu der es eine komplementäre Operation gibt, um die Übertragung der Nachricht oder eines Zwischenergebnisses, das durch Ausführen einer Operation der Kette erhalten wird, von einem Speicherplatz zu einem anderen handelt.

7. Verfahren nach einem der vorhergehenden Ansprüche, **dadurch gekennzeichnet, dass** es darin besteht, die Nachricht oder ein Zwischenergebnis, das aus der Ausführung einer vorhergehenden Operation der Kette resultiert, zu verwenden, darauf eine neue Operation aus der Kette oder die dazu komplementäre Operation, je nach Zustand eines Zufallsparameters $(S'_a)$, der dieser neuen Operation zugeordnet ist, anzuwenden, einen Komplementbildungszähler $(C_c)$ zu aktualisieren und den Zustand dieses Zählers am Ende der Ausführung der Kette von Operationen bei der Entscheidung über die Endkonfiguration der Antwort zu berücksichtigen.

8. Verfahren nach einem der Ansprüche 1 bis 6, **dadurch gekennzeichnet, dass** es darin besteht, die Nachricht oder ein Zwischenergebnis, das aus der Ausführung einer vorhergehenden Operation der Kette resultiert, zu verwenden, darauf eine neue Operation aus der Kette oder die dazu komplementäre Operation, je nach Zustand eines Zufallsparameters $(S'_a)$, der dieser neuen Operation zugeordnet ist, anzuwenden und von Operation zu Operation die Informationen zu übertragen, die zu den Zwischenergebnissen gehören, die für die Endkonfiguration der Antwort benötigt werden.

9. Verfahren nach einem der Ansprüche 1 bis 6, **dadurch gekennzeichnet, dass** in der zweiten Einheit zwei Ketten von Operationen $(Ch_1, Ch_2)$ zur Verarbeitung der Nachricht definiert werden, wobei die eine der Ketten aus einer Folge von vorgegebenen Operationen besteht und die andere Kette aus einer Folge der dazu komplementären Operationen und einer abschließenden Komplementbildung (C) besteht, und dadurch, dass bei jeder Erstellung einer vorerwähnten Nachricht eine Zufallsentscheidung darüber getroffen wird, welche der beiden Ketten von Operationen ausgeführt wird.

10. Verfahren nach einem der vorhergehenden Ansprüche, **dadurch gekennzeichnet, dass** während der Ausführung der Folge von Operationen die Differenz (d) zwischen der Anzahl der normal ausgeführten Operationen und der Anzahl der mit Komplementbildung ausgeführten Operationen berechnet wird, und dadurch, dass dann, wenn die Differenz einen vorgegebenen Wert überschreitet, die Zufälligkeit

(S'$_a$) bei der Entscheidung über die Ausführung der normalen oder der komplementären Operationen ausgeschaltet wird, um eine bestimmte Anzahl von aufeinanderfolgenden Operationen im bisher am wenigsten verwendeten Modus (normal oder komplementär) auszuführen, mit dem Ziel, die Differenz hinreichend zu verkleinern.

11. Verfahren nach einem der vorhergehenden Ansprüche, **dadurch gekennzeichnet, dass** die Komplementbildung byteweise erfolgt.

12. Verfahren nach einem der Ansprüche 1 bis 10, **dadurch gekennzeichnet, dass** die Komplementbildung bitweise erfolgt.

13. Verfahren nach einem der vorhergehenden Ansprüche, **dadurch gekennzeichnet, dass** dann, wenn mehrere aufeinanderfolgende Operationen der Kette kommutativ sind, die Reihenfolge ihrer Ausführung in zufälliger Weise vertauscht wird.

Fig.1

Fig. 2

**EP 1 122 909 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- WO 9963696 A

- NL 1011800 C